# FASCICULE DE BREVET EUROPEEN

(11) **EP 2 181 913 B1**
(45) Date de publication et mention de la délivrance du brevet: **07.12.2011**
(21) Numéro de dépôt: 09306033.3
(22) Date de dépôt: 29.10.2009
(51) Int. Cl.: B62D 25/20, B62D 21/14

(54) **Soubassement pour véhicule automobile et véhicule comportant un tel soubassement**
Unterbau für Kraftfahrzeug und Fahrzeug mit einem solchen Unterbau
Body understructure for an automobile and automobile comprising such a body understructure

(30) Priorité: 03.11.2008 FR 0857468
(43) Date de publication de la demande: 05.05.2010
(73) Titulaire: Peugeot Citroën Automobiles SA, 78140 Vélizy-Villacoublay (FR)
(72) Inventeur: Cadet, Stéphane, 28700, DENONVILLE (FR)

(56) Documents cités:
- EP-A- 1 982 903
- FR-A- 2 909 351

## Description

La présente invention concerne un soubassement pour véhicule automobile et un véhicule automobile équipé d'un tel soubassement.

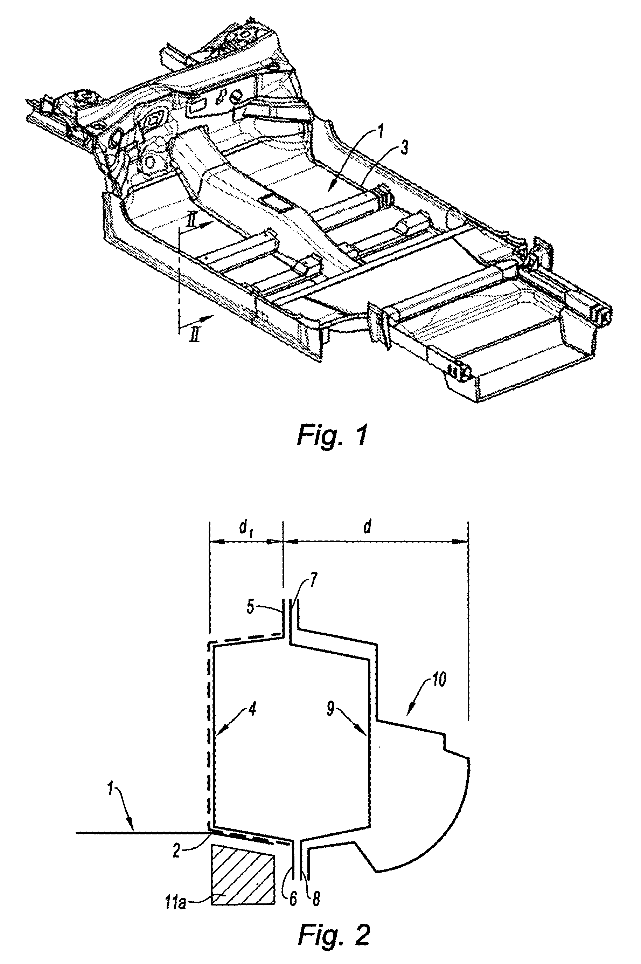

La figure 1 montre en perspective un soubassement pour véhicule automobile, selon l'état de la technique et la figure 2 est une vue en coupe à échelle agrandie suivant le plan II-II de la figure 1.

Ce soubassement pour véhicule automobile comprend un plancher 1 dont les deux bords longitudinaux 2, 3 sont reliés chacun à un longeron intérieur 4 dont les deux rebords extérieurs 5, 6 sont reliés aux deux rebords 7, 8 d'un longeron extérieur 9 pour former ensemble un corps creux.

Ce longeron extérieur 9 est recouvert extérieurement par une tôle 10 de bas de caisse, visible de l'extérieur du véhicule et appartenant au côté d'habitacle.

Les constructeurs automobiles possèdent dans leur gamme des véhicules possédant des soubassements plus ou moins larges.

Pour réduire les coûts de fabrication, les constructeurs automobiles cherchent à utiliser des soubassements communs à plusieurs véhicules différents.

A cet effet, ils sont obligés de respecter certaines contraintes de ce soubassement.

L'une de ces contraintes est la largeur d de la tôle du bas de caisse 10, comme indiqué sur la figure 2.

En effet, les possibilités de modifier la largeur d des bas de caisse 10 sont limitées par des contraintes de procédé de fabrication, telles que les profondeurs d'emboutissage maximum, les zones de contact pour la manipulation des soubassements par exemple au moyen d'une luge 11a (voir figure 2), et les zones d'appui de réglages qui sont toujours identiques pour tous les véhicules.

Une seconde contrainte est la largeur d1 du longeron intérieur 4 (voir figure 2).

En effet, la solution consistant à modifier la largeur d1 du longeron intérieur 4 pour augmenter la largeur du soubassement pour l'adapter à la largeur de chaque type de véhicule est très coûteuse.

Une solution a été décrite dans le document FR 2 775 243.

Cette solution consiste à utiliser pour chaque longeron intérieur deux profilés de section en U engagés l'un dans l'autre avec un espacement pouvant être modifié pour adapter la largeur du soubassement à celle du véhicule.

Cette solution est également coûteuse et compliquée à mettre en oeuvre, de plus elle alourdit les soubassements ainsi réalisés.

Une autre solution, consistant à disposer à l'extrémité latérale du plancher une pièce complémentaire permettant de proposer un plancher élargi, est décrite dans le document FR 2 909 351, qui divulgue toutes les caractéristiques du préambule de la revendication 1. Une telle solution permet seulement de proposer un soubassement plus large.

Le but de la présente invention est de remédier à ces inconvénients en proposant une solution peu coûteuse et facile à mettre en oeuvre pour modifier un soubassement standard afin de l'adapter à la largeur et éventuellement à la hauteur de différents véhicules.

Ce but est atteint, selon l'invention, grâce à un soubassement selon la revendication 1.

La pièce intermédiaire permet de modifier la largeur et éventuellement la hauteur du soubassement, sans avoir à modifier les dimensions du longeron intérieur et celles du plancher fixé à ce dernier.

Ainsi, un soubassement constitué par un plancher et un longeron intérieur commun à différents véhicules peut grâce à cette pièce intermédiaire être élargi ou rehaussé pour s'adapter à ces différents véhicules.

Selon l'invention, ladite pièce intermédiaire comporte au moins un pli longitudinal, la première partie de la pièce intermédiaire située sur l'un des côtés du pli étant appliquée et soudée contre un rebord du longeron extérieur et la seconde partie de la pièce située de l'autre côté du pli étant appliquée et soudée à une face du longeron intérieur.

On peut ainsi grâce à cette pièce intermédiaire modifier la largeur du soubassement.

Le longeron intérieur comporte une paroi latérale, une paroi supérieure et une paroi inférieure, la seconde partie de la pièce intermédiaire étant soudée à la paroi supérieure du longeron intérieur.

La largeur de la seconde partie de la pièce intermédiaire est telle qu'elle est adaptée suivant la largeur totale désirée du soubassement.

Ainsi, dans le cas d'un véhicule plus large nécessitant un soubassement élargi, la forme et les dimensions de la pièce intermédiaire sont telles que la paroi latérale du longeron intérieur est parallèle à une paroi latérale du longeron extérieur et une paroi inférieure de ce longeron a une largeur supérieure à celle d'une paroi supérieure de ce longeron extérieur.

Dans le cas d'un véhicule plus haut, la hauteur d'une paroi latérale du longeron extérieur est supérieure à la hauteur de la paroi latérale du longeron intérieur.

Dans le cas d'un véhicule plus bas que le véhicule standard, la hauteur d'une paroi latérale du longeron extérieur est, au contraire, inférieure à la hauteur de la paroi latérale du longeron intérieur.

Dans tous les cas, les dimensions et la forme du longeron intérieur restent inchangées.

Dans un mode de réalisation, la seconde partie de ladite pièce intermédiaire est raccordée à la première partie de cette pièce par une partie intermédiaire en forme d'escalier.

Une telle pièce intermédiaire permet de rehausser le véhicule.

Dans un autre mode de réalisation, la seconde partie de ladite pièce intermédiaire est raccordée à la première partie de cette pièce par une partie intermédiaire inclinée vers le bas, ce qui permet d'abaisser le véhicule.

De préférence, le longeron extérieur est recouvert extérieurement par une tôle de bas de caisse.

L'invention concerne également un véhicule automobile comprenant un soubassement selon l'invention.

D'autres particularités et avantages de l'invention apparaîtront encore tout au long de la description ci-après.

Aux dessins annexés, donnés à titre d'exemples, non limitatifs :
- la figure 3 est une vue en coupe analogue à la figure 2 concernant un agencement de soubassement selon l'invention adapté à un véhicule standard,
- la figure 4 est une vue analogue à la figure 3 concernant un agencement de soubassement selon l'invention adapté à un véhicule plus large,
- la figure 5 est une vue analogue à la figure 3 concernant un agencement de soubassement selon l'invention adapté à un véhicule plus haut,
- la figure 6 est une vue analogue à la figure 3 concernant un agencement de soubassement selon l'invention adapté à un véhicule plus bas.

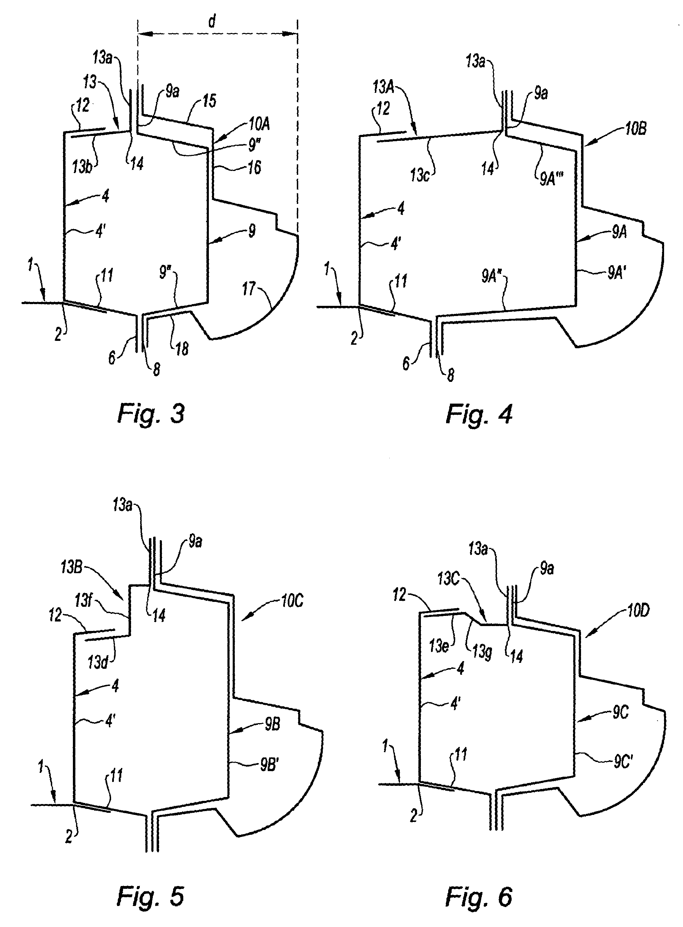

Dans les différents modes de réalisation représentés sur les figures 3 à 6, l'agencement de soubassement présente en commun avec celui représenté sur la figure 2, le plancher 1 soudé à la paroi inférieure 11 du longeron intérieur 4.

Ce longeron intérieur 4 est le même que celui représenté sur la figure 2, sauf que son rebord supérieur a été supprimé et qu'il ne subsiste qu'une partie 12 de sa paroi supérieure. Selon l'invention, ce longeron intérieur possède des dimensions communes pour tous les modes de réalisation.

Par ailleurs, dans tous les modes de réalisation représentés sur les figures 3 à 6, le longeron intérieur est relié au longeron extérieur 9, 9A, 9B, 9C par une pièce intermédiaire 13 (figure 3), 13A (figure 4), 13B (figure 5), ou 13C (figure 6), en tôle qui s'étend sur toute la longueur des deux longerons.

De plus dans tous les modes de réalisation, la pièce intermédiaire 13, 13A, 13B, 13C comporte au moins un pli longitudinal 14, la première partie 13a de la pièce intermédiaire 13, 13A, 13B, 13C située sur l'un des côtés du pli 14 étant appliquée et soudée contre une bordure pliée 9a du longeron extérieur 9, 9A, 9B, 9C et la seconde partie 13b, 13c, 13d, 13e de la pièce 13 située de l'autre côté du pli 14 est appliquée et soudée à une face de la paroi supérieure 12 du longeron intérieur 4, à savoir la face intérieure de cette paroi supérieure.

Dans les différents modes de réalisation représentés la largeur de la pièce intermédiaire 13 est adaptée suivant la largeur totale désirée du soubassement.

Dans le cas de la figure 3, la forme et les dimensions de la pièce intermédiaire 13 sont telles que le longeron 4 intérieur et la pièce intermédiaire sont disposés symétriquement par rapport à un plan vertical au longeron extérieur 9.

Ce mode de réalisation convient pour un véhicule standard, ni bas, ni haut.

Dans les autres modes de réalisation, la forme et les dimensions de la pièce intermédiaire 13A, 13B, 13C sont telles que le longeron intérieur 4 et la pièce intermédiaire ne sont pas disposés symétriquement par rapport à un plan vertical au longeron extérieur 9A, 9B, 9C.

Les jonctions inférieure et supérieure entre les deux longerons sont décalées par rapport à un plan vertical.

De plus, dans le cas de la figure 4, la forme et les dimensions de la pièce intermédiaire 13A sont telles que la paroi latérale 4' du longeron intérieur 4 est parallèle à la paroi latérale 9A' du longeron extérieur 9A et la paroi inférieure 9A" de ce longeron 9A a une largeur supérieure à celle de la paroi supérieure 9A"' de ce longeron extérieur.

Cet agencement permet d'élargir le soubassement pour adapter la largeur de ce dernier à un véhicule plus large que dans le cas de la figure 3.

II est à noter que cette augmentation de la largeur a été obtenue sans modifier le longeron intérieur 4 et sans modifier non plus la largeur de la paroi supérieure 9A"' du longeron extérieur 9A.

Seules, la largeur de la pièce intermédiaire 13A et celle de la paroi inférieure 9A" du longeron extérieur ont été modifiées.

Dans le mode de réalisation de la figure 5, la hauteur de la paroi latérale 9B' du longeron extérieur 9B est supérieure à la hauteur de la paroi latérale 4' du longeron intérieur 4.

Dans le mode de réalisation de la figure 6, au contraire, la hauteur de la paroi latérale 9C' du longeron extérieur 9C est inférieure à la hauteur de la paroi latérale 4' du longeron intérieur 4.

Dans le cas de la figure 5, la seconde partie 13d de la pièce intermédiaire 13B est raccordée à la première partie 13a de cette pièce par une partie intermédiaire 13f en forme d'escalier, ce qui permet de compenser la différence de hauteur des deux longerons 4 et 9B.

L'agencement selon la figure 5 du soubassement permet de rehausser celui-ci pour des véhicules plus haut que dans le cas des figures 3 et 4.

Dans le cas de la figure 6, la seconde partie 13e de ladite pièce intermédiaire 13C est raccordée à la première partie 13a de cette pièce par une partie intermédiaire 13g inclinée vers le bas pour compenser la différence de hauteur des longerons 4 et 9C.

Cet agencement permet d'abaisser le soubassement pour des véhicules plus bas que dans le cas des figures 3 et 4.

On peut envisager d'autres solutions intermédiaires entre celles représentées adaptées à des véhicules à la fois hauts et larges ou bas et larges en augmentant la largeur des pièces intermédiaires 13B et 13C et en modifiant les longerons extérieurs 9B et 9C comme indiqué sur la figure 4, c'est-à-dire en adaptant la largeur de la paroi inférieure de ces longerons extérieurs.

Dans les exemples des figures 5 et 6, les largeurs des parois inférieures et supérieures des longerons extérieurs 9B et 9C restent identiques à celles des parois inférieure et supérieure du longeron 9 de la figure 3.

Dans les modes de réalisation décrits sur les figures 3 à 6, la tôle de bas de caisse 10A, 10B, 10C, 10D qui recouvre extérieurement le longeron extérieur 9, 9A, 9B, 9C comporte une première partie 15 (voir figure 3) qui recouvre la paroi supérieure du longeron extérieur 9, une deuxième partie 16 qui recouvre partiellement la paroi latérale de ce longeron 9, une troisième partie 17 qui recouvre l'autre partie de cette paroi latérale et faisant saillie vers l'extérieur et une quatrième partie 18 qui recouvre la paroi inférieure du longeron extérieur 9.

Dans tous les cas, les dimensions des différentes parties 15, 16, 17, 18 de la tôle de bas de caisse 10A, 10B, 10C, 10D sont adaptées à celles du longeron extérieur 9, 9A, 9B, 9C.

La forme et les dimensions du soubassement dans la zone de raccordement entre le plancher 1 et le longeron intérieur 4 restent inchangées dans les différents modes de réalisation, de sorte que les différents agencements sont compatibles avec les moyens de manutention et de réglage utilisés.

Pour fabriquer un soubassement pour véhicule automobile selon l'invention on assemble entre eux, les deux ensembles suivants :
- un premier ensemble comprenant un plancher 1 dont les deux bords longitudinaux sont reliés chacun à un longeron intérieur 4 dont la paroi inférieure 11 porte un rebord inférieur 6 et dont la paroi supérieure 12 est dépourvue de rebord,
- un second ensemble comprenant un longeron extérieur 9, 9A, 9B, 9C dont la paroi inférieure 9", 9A" porte un rebord inférieur 8 et la paroi supérieure 9"', 9A"' porte un rebord supérieur 9a auquel est fixé ladite pièce intermédiaire 13, 13A, 13B, 13C,
- on soude ensemble le rebord inférieur 8 du longeron extérieur 9, 9A, 9B, 9C et le rebord inférieur 6 du longeron intérieur 4 ainsi que la pièce intermédiaire 13, 13A, 13B, 13C portée par le rebord supérieur 9a du longeron extérieur et la paroi supérieure 12 du longeron intérieur 4.

Le premier ensemble ci-dessus est commun à plusieurs types de véhicule et le second ensemble est choisi parmi un lot de plusieurs seconds ensembles différents comportant différentes pièces intermédiaires 13, 13A, 13B, 13C adaptées au type de véhicule, c'est-à-dire du type standard, large, haut ou bas.

Bien évidemment, d'autres modes d'assemblage peuvent être envisagés.

## Revendications

1. Soubassement pour véhicule automobile comprenant un plancher (1) dont les deux bords longitudinaux (2,3) sont reliés chacun à un longeron intérieur (4) dont les deux rebords extérieurs (6, 12) sont reliés aux deux rebords (8, 9a) d'un longeron extérieur (9, 9A, 9B, 90) pour former ensemble un corps creux, le longeron intérieur (4) comportant une paroi latérale (4'), une paroi supérieure (12) et une paroi inférieure (11) et étant relié au longeron extérieur (9, 9A, 9B, 90) par une pièce intermédiaire en tôle (13, 13A, 13B, 13C), ladite pièce intermédiaire (13, 13A, 13B, 130) comportant au moins un pli longitudinal (14), la première partie (13a) de la pièce intermédiaire située sur l'un des côtés du pli (14) étant appliquée et soudée contre un rebord (9a) du longeron extérieur (9, 9A, 9B, 9C) et la seconde partie (13b, 13c, 13d, 13e) de la pièce située de l'autre côté du pli (14) étant appliquée et soudée à la paroi supérieure (12) du longeron intérieur (4),
**caractérisé en ce que**
la largeur de la paroi inférieure (9", 9A") du longeron extérieur et celle de ladite seconde partie (13b, 13c, 13d, 13e) de la pièce intermédiaire (13, 13A, 13B, 13C) sont telles, que la largeur totale désirée du soubassement est obtenue.

2. Soubassement selon la revendication 1, **caractérisé en ce que** la forme et les dimensions de la pièce intermédiaire (13A) sont telles que la paroi latérale du longeron intérieur (4) est parallèle à une paroi latérale du longeron extérieur (9A) et une paroi inférieure (9A") de ce longeron (9A) a une largeur supérieure à celle d'une paroi supérieure (9A"') de ce longeron extérieur (9A).

3. Soubassement selon la revendication 1, **caractérisé en ce que** la hauteur d'une paroi latérale (9B') du longeron extérieur (9B) est supérieure à la hauteur de la paroi latérale (4') du longeron intérieur (4).

4. Soubassement selon la revendication 1, **caractérisé en ce que** la hauteur d'une paroi latérale du longeron extérieur (9C) est inférieure à la hauteur de la paroi latérale (4') du longeron intérieur (4).

5. Soubassement selon la revendication 3, **caractérisé en ce que** la seconde partie (13d) de ladite pièce intermédiaire (138) est raccordée à la première partie (13a) de cette pièce par une partie intermédiaire (13f) en forme d'escalier.

6. Soubassement selon la revendication 4, **caractérisé en ce que** la seconde partie (13e) de ladite pièce intermédiaire (13C) est raccordée à la première partie (13a) de cette pièce par une partie intermédiaire (13g) inclinée vers le bas.

7. Soubassement selon l'une des revendications 1 à 6, **caractérisé en ce que** le longeron extérieur est recouvert extérieurement par une tôle de bas de caisse (10A, 10B, 10C, 10D).

8. Véhicule automobile comprenant un soubassement selon l'une des revendications 1 à 7.

## Claims

1. Underbody for a motor vehicle including a floor (1), the two longitudinal edges (2, 3) of which are each connected to an inner side rail (4), the two outer borders (6, 12) of which are connected to the two borders (8, 9a) of an outer side rail (9, 9A, 9B, 90) to form together a hollow body, the inner side rail (4) comprising a lateral wall (4'), an upper wall (12) and a lower wall (11) and being connected to the outer side rail (9, 9A, 9B, 90) by an intermediate piece of sheet metal (13, 13A, 13B, 13C), the said intermediate piece (13, 13A, 13B, 130) comprising at least one longitudinal fold (14), the first part (13a) of the intermediate piece situated on one of the sides of the fold (14) being applied and welded against a border (9a) of the outer side rail (9, 9A, 9B, 9C) and the second part (13b, 13c, 13d, 13e) of the piece situated on the other side of the fold (14) being applied and welded to the upper wall (12) of the inner side rail (4),
**characterized in that**
the width of the lower wall (9", 9A") of the outer side rail and that of the said second part (13b, 13c, 13d, 13e) of the intermediate piece (13, 13A, 13B, 13C) are such that the total desired width of the underbody is obtained.

2. Underbody according to Claim 1, **characterized in that** the shape and the dimensions of the intermediate piece (13A) are such that the lateral wall of the inner side rail (4) is parallel to a lateral wall of the outer side rail (9A) and a lower wall (9A") of this side rail (9A) has a width greater than that of an upper wall (9A"') of this outer side rail (9A).

3. Underbody according to Claim 1, **characterized in that** the height of a lateral wall (9B') of the outer side rail (9B) is greater than the height of the lateral wall (4') of the inner side rail (4).

4. Underbody according to Claim 1, **characterized in that** the height of a lateral wall of the outer side rail (9C) is less than the height of the lateral wall (4') of the inner side rail (4).

5. Underbody according to Claim 3, **characterized in that** the second part (13d) of the said intermediate piece (13B) is connected to the first part (13a) of this piece by an intermediate part (13f) in tiered form.

6. Underbody according to Claim 4, **characterized in that** the second part (13e) of the said intermediate piece (13C) is connected to the first part (13a) of this piece by an intermediate part (13g) inclined downwards.

7. Underbody according to one of Claims 1 to 6, **characterized in that** the outer side rail is covered externally by a body lower panel sheet (10A, 10B, 10C, 10D).

8. Motor vehicle including an underbody according to one of Claims 1 to 7.

## Patentansprüche

1. Karosserieboden für Kraftfahrzeug, der einen Boden (1) aufweist, dessen zwei Längsränder (2, 3) jeweils mit einem Innenlängsbalken (4) verbunden sind, dessen zwei Außenränder (6, 12) mit zwei Rändern (8, 9a) eines Außenlängsbalkens (9, 9A, 9B, 90) verbunden sind, um gemeinsam einen Hohlkörper zu bilden, wobei der Innenlängsbalken (4) eine Seitenwand (4'), eine obere Wand (12) und eine untere Wand (11) aufweist und mit dem Außenlängsbalken (9, 9A, 9B, 90) durch einen Zwischenteil aus Blech (13, 13A, 13B, 13C) verbunden ist, wobei der Zwischenteil (13, 13A, 13B, 130) mindestens eine Längsfalte (14) aufweist, wobei der erste Teil (13a) des Zwischenteils, der sich auf einer der Seiten der Falte (14) befindet, gegen einen Rand (9a) des Außenlängsbalkens (9, 9A, 9B, 9C) angelegt und geschweißt ist und der zweite Teil (13b, 13c, 13d, 13e) des Teils, der sich auf der anderen Seite der Falte (14) befindet, an die obere Wand (12) des Innenlängsbalkens (4) angelegt und geschweißt ist,
**dadurch gekennzeichnet, dass**
die Breite der Innenwand (9", 9A" ) des Außenlängsbalkens und die des zweiten Teils (13b, 13c, 13d, 13e) des Zwischenteils (13, 13A, 13B, 13C) derart sind, dass die gewünschte Gesamtbreite des Karosseriebodens erzielt wird.

2. Karosserieboden nach Anspruch 1, **dadurch gekennzeichnet, dass** die Form und die Maße des Zwischenteils (13A) derart sind, dass die Seitenwand des Innenlängsbalkens (4) zu einer Seitenwand des Außenlängsbalkens (9A) parallel ist und eine Innenwand (9A") dieses Längsbalkens (9A) eine Breite hat, die größer ist als die einer oberen Wand (9A"') dieses Außenlängsbalkens (9A).

3. Karosserieboden nach Anspruch 1, **dadurch gekennzeichnet, dass** die Höhe einer Seitenwand (9B') des Außenbalkens (9B) größer ist als die Höhe der Seitenwand (4') des Innenlängsbalkens (4).

4. Karosserieboden nach Anspruch 1, **dadurch gekennzeichnet, dass** die Höhe einer Seitenwand des Außenlängsbalkens (9C) kleiner ist als die Höhe der Seitenwand (4') des Innenlängsbalkens (4).

5. Karosserieboden nach Anspruch 3, **dadurch gekennzeichnet, dass** der zweite Teil (13d) des Zwischenteils (13B) an den ersten Teil (13a) dieses Teils über einen Zwischenteil (13f) in Treppenform angeschlossen ist.

6. Karosserieboden nach Anspruch 4, **dadurch gekennzeichnet, dass** der zweite Teil (13e) des Zwischenteils (13C) an den ersten Teil (13a) dieses Teils über einen Zwischenteil (13g), der nach unten geneigt ist, angeschlossen ist.

7. Karosserieboden nach einem der Ansprüche 1 bis 6, **dadurch gekennzeichnet, dass** der Außenlängsbalken außen mit einem Karosseriebodenblech (10A, 10B, 10C, 10D) abgedeckt ist.

8. Kraftfahrzeug, das einen Karosserieboden nach einem der Ansprüche 1 bis 7 aufweist.
